# DEMANDE DE BREVET EUROPEEN

(11) **EP 2 128 089 A2**
(43) Date de publication de la demande: **02.12.2009**
(21) Numéro de dépôt: 09290374.9
(22) Date de dépôt: 20.05.2009
(51) Int. Cl.: C01B 33/02

(54) **Nanofils à base de silicium et procédé de dispersion de ces nanofils**

(30) Priorité: 30.05.2008 FR 0802975
(71) Demandeur: Commissariat à l'Energie Atomique, Bâtiment D "Le Ponant" 25 rue Leblanc 75015 Paris (FR)
(72) Inventeur: Carella, Alexandre, 64110 Mazères Lezons (FR); Simonato, Jean-Pierre, 38360 Sassenage (FR); Suspene, Clément, 19000 Tulle (FR)
(74) Mandataire: Noel, Chantal Odile

(57) **Abrégé**

L'invention propose un nanofil en un matériau à base de silicium dont la surface comprend au moins une protubérance en or, **caractérisé en ce qu**'un dérivé organique soufré est greffé à au moins une de ces protubérances en or.

## Description

L'invention concerne des nanofils en un matériau à base de silicium ainsi qu'un procédé de dispersion, dans un solvant, de ces nanofils.

Les nanofils en un matériau à base de silicium sont des objets quasi-unidimensionnels de taille nanométrique. Ils présentent un facteur de forme, c'est-à-dire un rapport longueur/diamètre, important, supérieur à 10, avec au moins deux dimensions inférieures à un 1 micromètre.

Les termes "nanofils en un matériau à base de silicium" désignent, dans le texte qui suit et qui précède et dans les revendications annexées, des nanofils en silicium, ou des nanofils en un alliage silicium/germanium, SiGe, ou des nanofils en un matériau composite, Si/SiGe. Le plus couramment, ces matériaux de silicium ou à base de silicium sont dopés.

Ces nanofils ont un caractère semi-conducteur ou conducteur, suivant leur dopage, ce qui en fait des espèces d'intérêt pour nombre d'études et d'applications, notamment dans le domaine de l'électronique grande surface, des capteurs, de la thermoélectricité, de l'optronique, etc ...

Cependant, leur utilisation est aujourd'hui restreinte car il est difficile de les manipuler en phase liquide.

En effet, la dispersion de ces nanofils de façon stable, dans un milieu liquide, est très difficile à obtenir, notamment avec une répartition uniforme des nanofils dans le volume de liquide, c'est-à-dire avec une bonne distribution dans le volume de liquide.

Il est cependant essentiel d'arriver à obtenir des solutions homogènes de ces nanofils dans différents milieux liquides, par exemple pour procéder à leur dispense de façon contrôlée et pour pouvoir réaliser la modification chimique de leur surface en utilisant les moyens classiques de mise en oeuvre de la chimie organique.

Une méthode pour disperser des nanofils d'or, dans un solvant polaire, tel que l'isopropanol, est décrite dans J. Apply. Phys, 2007, 102, 034302.

Cependant, cette méthode nécessite des conditions très précises de passage aux ultrasons difficilement industrialisables. De plus, la dispersion obtenue bien qu'homogène, n'est pas stable bien longtemps.

A l'heure actuelle, on ne connait pas de méthode permettant d'obtenir une dispersion stable de nanofils en un matériau à base de silicium, en solution, en particulier dans les solvants apolaires.

Or, les nanofils en un matériau à base de silicium sont souvent utilisés pour la synthèse de matériaux composites avec un polymère pour fabriquer des matrices semi-conductrices.

Dans ce type de synthèse, la mise en oeuvre de nanofils en un matériau à base de silicium est aujourd'hui difficile en raison de l'impossibilité de disperser les nanofils à base de silicium dans un solvant compatible avec les molécules organiques.

Les nanofils en un matériau à base de silicium peuvent être synthétisés par différents procédés.

Un procédé particulier consiste à synthétiser les nanofils en un matériau à base de silicium par dépôt chimique en phase vapeur (CVD) d'un précurseur en présence d'un catalyseur.

Divers précurseurs sont utilisés comportant des atomes de silicium ou de germanium (par exemple SiH₄, Si₂H₆, SiH₂Cl₂, SiCl₄, GeH₄, GeCl₄, etc) et un catalyseur particulièrement utilisé est l'or, comme décrit dans Nano Letters 2008, 8, 362-368.

Dans ce document, il est indiqué qu'en fin de croissance, l'or se retrouve au sommet du nanofil synthétisé, mais peut, suivant les conditions opératoires, se retrouver partiellement en surface sur les bords du nanofil.

Il est possible de synthétiser des nanofils comportant de nombreuses (jusqu'à10⁵ particules/µm²) particules d'or sur les parois.

Par ailleurs, les composés organiques thiol sont des molécules bien connues pour solubiliser et disperser les nanoparticules d'or.

Un procédé utilisé pour disperser des nanoparticules d'or d'une taille inférieure à 100 nanomètres, est décrit dans Nanoletters, 2007, 7, 2881-2885).

Cependant, dans ce document, les particules d'or sont soit des nano-sphères soit des nano-barreaux d'or, c'est-à-dire des nano-objets ayant un facteur de forme moins important, c'est-à-dire un rapport longueur/diamètre de 1 à 10, que celui des nanofils en matériau à base de silicium selon l'invention mais surtout ne possédant pas une dimension de l'ordre du micromètre.

L'invention vise à pallier les inconvénients des procédés de l'art antérieur pour obtenir une dispersion de nanofils en un matériau à base de silicium, dans tout solvant.

A cet effet, l'invention propose un procédé de dispersion de nanofils en un matériau à base de silicium comprenant au moins une protubérance en or à leur surface, dans un solvant, qui comprend une étape de greffage, sur au moins une protubérance en or de chaque nanofil, d'un dérivé organique soufré de formule I suivante :
X-S-R
dans laquelle
- X est H ou un groupe protecteur de thiol, et
- R est un groupe hydrocarboné en C₂ à C₄₀ pouvant contenir un hétéroatome.

R peut comprendre un radical choisi parmi un radical hydroxyle, un radical amine, un radical aromatique, un radical perfluoré, un radical ester, un radical amide et/ou un radical ester sulfonique.

Lorsque le solvant est un solvant polaire, de préférence, dans la formule I, le groupe R est choisi parmi un groupe polyéthylèneglycol, ou un groupe organique pouvant contenir un hétéroatome et comprenant au moins deux atomes de carbone et au moins un radical choisi parmi un radical hydroxyle, un radical amine, un radical amide, un radical ester sulfonique.

Mais, lorsque le solvant est un solvant apolaire, de préférence, dans la formule I, R est un groupe organique pouvant contenir au moins un hétéroatome et comprenant au moins deux atomes de carbone et au moins un radical aromatique, ou est un groupe alkyle en C₂ à C₄₀ pouvant contenir au moins un hétéroatome. Un dérivé organique soufré dans ce cas est l'octadécanethiol.

*A contrario*, lorsque le solvant est un solvant perfluoré, dans la formule I, de préférence, R est un groupe organique pouvant contenir au moins un hétéroatome différent du fluor mais comprenant au moins deux atomes de carbone et au moins un radical perfluoré.

Dans ce dernier cas, de préférence, le dérivé organique soufré de formule I est le 1*H*, *1H, 2H, 2H*-perfluorodécanethiol.

Dans un premier mode préféré de mise en oeuvre du procédé de l'invention, les nanofils à disperser sont en silicium.

Dans un second mode de mise en oeuvre préféré du procédé de l'invention, les nanofils sont en un alliage SiGe.

Enfin, dans un troisième mode préféré de mise en oeuvre du procédé de l'invention, les nanofils sont en un matériau composite Si/SiGe.

L'invention propose également un nanofil en un matériau à base de silicium dont la surface comprend au moins une protubérance en or, un dérivé organique soufré était greffé à au moins une de ces protubérances en or, **caractérisé en ce que** le dérivé organique soufré est choisi parmi le 1*H*, 1*H*, 2*H*, 2H-perfluorodécanethiol et l'octadécanethiol.

De préférence, le matériau à base de silicium est un alliage SiGe ou en matériau composite Si/SiGe.

L'invention sera mieux comprise et d'autres avantages et caractéristiques de celle-ci apparaitront plus clairement à la lecture de la description explicative qui suit.

Les nanofils en un matériau à base de silicium, tels que définis dans l'invention, ont un facteur de forme très important, supérieur à 10.

Ils peuvent être en silicium, ou en un alliage de silicium/germanium, ou encore en un matériau composite Si/SiGe, dopés ou non dopés.

Leur facteur de forme supérieur à 10 et leur grande taille, jusqu'à plusieurs micromètres de longueur, et de préférence de 1 à 10 µm inclus de longueur, les rendent intrinsèquement difficiles à disperser. De plus, de par la nature du matériau dont ils sont composés, ils ont peu d'interaction avec les solvants, et leur forme allongée et leur rigidité sont des inconvénients à leur dispersion, car ils ne peuvent pas adapter leur morphologie pour augmenter leur interaction avec les solvants comme le font les polymères ou les nanotubes de carbone. Les nano-barreaux d'or ont un facteur de forme plutôt inférieur à celui des nanofils, et une taille très inférieure, ce qui facilite leur dispersion.

Or, on a découvert que, de façon surprenante, le greffage de dérivés organiques soufrés sur les parois de nanofils en matériau à base de silicium, de grande taille, permet de les disperser dans toutes les phases liquides, en fonction du dérivé organique soufré choisi.

De préférence, les nanofils en un matériau à base de silicium de l'invention sont des nanofils fabriqués par la méthode CVD en utilisant l'or comme catalyseur.

En effet, ces nanofils comportent, de par leur synthèse, des protubérances d'or à leur surface, ce qui était considéré dans l'art antérieur comme un inconvénient car il fallait ensuite éliminer cet or.

Or, contre toute attente, le nombre limité, de 10⁵ particules/µm² de particules d'or présentes à la surface des nanofils en un matériau à base de silicium est suffisant pour permettre la dispersion de ces derniers lorsqu'un dérivé organique soufré est greffé sur au moins une de ces protubérance d'or.

Bien entendu, il apparaitra clairement à l'homme de l'art, que tout nanofil, quelque soit sa méthode de synthèse, qui comporte des protubérances d'or à sa surface, cette protubérance d'or étant soit obtenue directement dans la synthèse, soit par un post traitement, peut être dispersé dans un solvant lorsqu'un dérivé organique soufré est greffé sur au moins une des protubérances d'or présentes à la surface de chaque nanofil.

Le dérivé organique soufré doit être choisi pour comprendre un groupement ayant une forte affinité pour le solvant dans lequel les nanofils en un matériau à base de silicium sont à disperser.

Ainsi, le dérivé organique soufré greffé sur la au moins une particule d'or a la formule générale I suivante :
X-S-R,
dans laquelle
- X est H ou un groupement protecteur de thiol, et
- R est un groupe alkyle en C₂ à C₄₀ pouvant contenir un hétéroatome ou un groupe organique comprenant au moins deux atomes de carbone et au moins un radical ayant une forte affinité pour le solvant dans lequel on veut disperser les nanofils et, optionnellement un hétéroatome.

Lorsque X est H, le dérivé organique soufré est alors un composé thiol. Mais X pourra également être un groupement protecteur des thiols tel que par exemple, un groupe acétate.

L'atome de soufre a une forte affinité pour l'or et est le point de greffage du dérivé soufré sur la protubérance en or.

Quant au groupe R, il permet de contrôler la dispersion des nanofils dans les solvants. Sa fonction est de favoriser la compatibilité chimique avec le solvant par des interactions faibles, d'augmenter la surface de contact entre les nanofils et le solvant, c'est-à-dire de diminuer l'interaction entre les nanofils entre eux, c'est-à-dire d'augmenter la répartition des nanofils dans le volume. Ainsi, les groupes R comprennent au moins deux atomes de carbone pour permettre l'augmentation de la surface de contact entre les nanofils et le solvant, et au moins un radical compatible avec le solvant dans lequel ils sont à disperser. Le radical R peut contenir un hétéroatome, en particulier un atome de soufre, auquel cas le dérivé organique soufré peut être un composé disulfure. Un tel composé disulfure est également un dérivé organique soufré préféré de l'invention.

Ainsi, lorsque la dispersion des nanofils est voulue dans des solvants polaires tels que les alcools, l'eau, l'acétone, le groupement R dans la formule I comprend des fonctions polaires telles qu'un radical polyéthylèneglycol, hydroxyle ou amine.

En revanche, lorsque les nanofils sont à disperser dans des solvants non polaires, tels que les alcanes, les solvants aromatiques et les solvants chlorés par exemple, le groupement R est un alkyle en C₂ à C₄₀ ou comprend un radical aromatique. Un dérivé organique soufré de formule I préféré est alors l'octadécanethiol.

Enfin, lorsque la dispersion des nanofils est à faire dans des solvants perfluorés, le groupement R comprend au moins un radical perfluoré.

Dans ce cas, un dérivé organique soufré de formule I préféré utilisé pour la dispersion des nanofils en un matériau à base de silicium dans un solvant perfluoré est le 1*H*, 1*H*, 2*H*, 2*H*-perfluorodécanethiol.

L'invention propose également un procédé de dispersion de nanofils en un matériau à base de silicium, comprenant au moins une particule d'or à leur surface, dans un solvant, qui comprend une étape de greffage d'un dérivé organique soufré tel que défini ci-dessus.

Le procédé de dispersion de nanofils en un matériau à base de silicium de l'invention permet la dispersion de nanofils en silicium, en alliage de silicium et de germanium, SiGe, ou encore en un matériau composite Si/SiGe.

Le dérivé organique soufré sera choisi, comme décrit précédemment, en fonction du solvant dans lequel la dispersion des nanofils est à effectuer.

Afin de mieux faire comprendre l'invention, on va en décrire à titre d'exemple purement illustratif et non limitatif un mode de mise en oeuvre.

### Exemple

Des nanofils en silicium d'une longueur de 2 µm et d'un diamètre de 50 nm sont mis à croître sur une tranche de silicium, par CVD en utilisant l'or comme catalyseur, et SiH₄ comme précurseur de silicium.

Deux morceaux A et B de tailles identiques, (1 cm²), sont prélevés sur la tranche de silicium sur laquelle ont été synthétisés les nanofils. Ces deux morceaux A et B contiennent une densité de nanofils équivalente sur leurs surfaces.

Le morceau A est mis à tremper dans 1 mL de perfluorométhylcyclohexane pendant deux heures, puis est passé aux ultrasons dans le même solvant pendant trente secondes. La solution est prélevée et centrifugée à 14500 t/min pendant une minute. Une goutte, 20 µL, de surnageant est prélevée pour analyse par microscopie éléctronique à balayage (MEB). On obtient l'échantillon n° 1.

Le morceau B est mis à tremper dans 1 mL de perfluorométhylcyclohexane contenant 30 mg de 1*H*, 1*H*, 2*H*, 2*H-*perfluorodécanethiol pendant deux heures, puis passé aux ultrasons dans la même solution pendant trente secondes. La solution est prélevée et centrifugée à 14500 t/min pendant une minute et une goutte, 20 µL, de surnageant est prélevée pour analyse par MEB. On obtient l'échantillon n° 2.

L'analyse par MEB montre un nombre nettement plus important de nanofils dans l'échantillon n°2 par rapport à l'échantillon n°1, avec un rapport au moins égal à 1 pour 20.

Ainsi, une dispersion de nanofils en un matériau à base de silicium comprenant au moins une protubérance d'or à leur surface dans un liquide a été obtenue par greffage d'un dérivé organique soufré, le perfluorodécanethiol, sur au moins une protubérance d'or de la surface de chaque nanofil.

Le greffage des dérivés organiques soufrés n'est en aucun cas incompatible avec l'utilisation des nanofils ainsi greffés pour diverses applications : en effet, on peut les éliminer, par exemple, par pyrolyse ou par oxydation.

Les nanofils en dispersion ainsi obtenus peuvent être utilisés pour la réalisation de dispositifs à base de nanofils, par exemple pour l'électronique grande surface, les capteurs, la thermoélectricité, l'optronique, etc.

## Revendications

1. Procédé de dispersion de nanofils en un matériau à base de silicium comprenant au moins une protubérance en or à leur surface, dans un solvant, **caractérisé en ce qu'**il comprend une étape de greffage, sur au moins une des protubérances en or de chaque nanofil, d'un dérivé organique soufré de formule I suivante :
X-S-R
dans laquelle
- X est H ou un groupe protecteur de thiol, et
- R est un groupe hydrocarboné en C₂ à C₄₀ pouvant contenir au moins un hétéroatome.

2. Procédé selon la revendication 1, **caractérisé en ce que** R comprend un radical choisi parmi un radical hydroxyle, un radical amine, un radical aromatique, un radical perfluoré, un radical ester, un radical amide, un radical ester sulfonique.

3. Procédé selon la revendication 1 ou 2, **caractérisé en ce que** le solvant est un solvant polaire et **en ce que** le groupe R dans la formule I est un groupe polyéthylèneglycol, et/ou un groupe organique comprenant au moins deux atomes de carbone et au moins un radical choisi parmi un radical hydroxyle ou un radical amine, ou un radical amide, ou un radical ester sulfonique, et optionnellement au moins un hétéroatome.

4. Procédé selon la revendication 1 ou 2, **caractérisé en ce que** le solvant est un solvant apolaire et **en ce que** dans la formule I, R est un groupe alkyle en C₂ à C₄₀ ou un groupe organique comprenant au moins deux atomes de carbone et au moins un radical aromatique et optionnellement, au moins un hétéroatome.

5. Procédé selon la revendication 4 **caractérisé en ce que** le dérivé soufré de formule I est l'octadécanethiol.

6. Procédé selon la revendication 1 ou 2, **caractérisé en ce que** le solvant est un solvant perfluoré et **en ce que** dans la formule I, R est un groupe organique comprenant au moins deux atomes de carbone et un radical perfluoré et optionnellement au moins un hétéroatome différent du fluor.

7. Procédé selon la revendication 6 **caractérisé en ce que** le dérivé organique soufré de formule I est le 1*H*, *1H, 2H*, *2H*-perfluorodécanethiol.

8. Procédé selon l'une quelconque des revendications précédentes **caractérisé en ce que** le matériau à base de silicium est du silicium.

9. Procédé selon l'une quelconque des revendications précédentes **caractérisé en ce que** le matériau à base de silicium est un alliage SiGe.

10. Procédé selon l'une quelconque des revendications précédentes **caractérisé en ce que** le matériau à base de silicium est un matériau composite Si/SiGe.

11. Nanofil en un matériau à base de silicium dont la surface comprend au moins une protubérance en or, un dérivé organique soufré était greffé à au moins une de ces protubérances en or, **caractérisé en ce que** le dérivé organique soufré est choisi parmi le 1*H*, 1*H*, 2*H*, 2*H*-perfluorodécanethiol et l'octadécanethiol.

12. Nanofil selon la revendication 11 **caractérisé en ce que** le matériau à base de silicium est un alliage SiGe.

13. Nanofil selon la revendication 11 ou 12 **caractérisé en ce que** la matériau à base de silicium est un matériau composite Si/SiGe.
